# EUROPÄISCHE PATENTSCHRIFT

(11) **EP 2 104 557 B1**
(45) Veröffentlichungstag und Bekanntmachung des Hinweises auf die Patenterteilung: **07.01.2015**
(21) Anmeldenummer: 07819880.1
(22) Anmeldetag: 21.11.2007
(51) Int. Cl.: B01J 8/02, C01C 1/04

(54) **AMMONIAKKONVERTER**
AMMONIA CONVERTER
CONVERTISSEUR D'AMMONIAC

(30) Priorität: 21.12.2006 DE 102006061847
(43) Veröffentlichungstag der Anmeldung: 30.09.2009
(73) Patentinhaber: ThyssenKrupp Uhde GmbH, 44141 Dortmund (DE)
(72) Erfinder: MICHEL, Reinhard, 44797 Bochum (DE); LIPPMANN, Dennis, 44267 Dortmund (DE); JOHANNING, Joachim, 46045 Oberhausen (DE)
(74) Vertreter: Meinke, Dabringhaus und Partner GbR
(86) Internationale Anmeldenummer: PCT/EP2007/010061
(87) Internationale Veröffentlichungsnummer: WO 2008/080453

(56) Entgegenhaltungen:
- EP-A- 0 282 699
- AT-B- 287 011
- DE-A1- 1 957 696
- DE-A1- 2 306 516
- DE-U1- 8 334 218
- US-A- 2 133 249

## Beschreibung

Die Erfindung richtet sich auf einen Ammoniakkonverter mit wenigstens einem im Wesentlichen radial durchströmten Katalysatorbett, welches einen Wärmetauscher konzentrisch umgibt, wobei zwischen Konverteraußenwand und dem äußeren Zylindermantel des Katalysators und/oder zwischen der inneren Zylinderwand des Katalysators und einem die Wärmetauscherrohre umgebenden Strömungsleitzylinder ein äußerer bzw. ein innerer Ringraum vorgesehen ist.

Derartige Ammoniakkonverter gibt es in unterschiedlichen Gestaltungen. Hier sei lediglich als Beispiel auf die Konstruktionen nach dem DE-83 34 218-U1 oder dem DE-87 17 724-U1 der Anmelderin verwiesen.

Derartige Reaktoren zur Ammoniakerzeugung sind mit mehreren Katalysatorbetten ausgestaltet, die von Synthesegas nacheinander durchströmt werden. Zur Abführung der Reaktionswärme des in den Katalysatorbetten gebildeten Ammoniaks sind an jedem Katalysatorbett Wärmetauscher vorgesehen, die die Reaktionswärme des aus dem Katalysatorbett austretenden Gases auf das eintretende Kreislaufgas übertragen, wobei es bekannt ist, je nach Anlagekonfiguration die Konverter mit zwei Katalysatorbetten und einem internen Wärmetauscher, der vom ersten Bett umgeben wird, vorzusehen oder drei Katalysatorbetten, wobei dann die ersten beiden Betten im Inneren die Wärmetauscher umgeben.

Bei einer derartigen Verfahrensweise ist es notwendig, den in den Katalysatorbetten befindlichen Katalysator vor der Erstinbetriebnahme zu reduzieren, um damit das Katalysatormaterial zu aktivieren. Dabei strömt das Gas während des Anfahrens oder bei der Katalysatorreduktion über einen beheizten Vorwärmer und vom äußeren Ringraum in das erste Katalysatorbett, durch das Katalysatorbett hindurch in den inneren Ringraum und dann dort auf die Mantelseite des im Inneren befindlichen Wärmetauschers. Dabei gibt das Gas im Normalbetrieb seine Wärme an das in den Wärmetauscher einströmende Kreislaufgas ab.

Sind mehrere Katalysatorbetten und im Inneren befindliche Wärmetauscher vorgesehen, ergibt sich aus einer entsprechenden Strömungsführung ein ähnliches Durchströmverhalten auch bei den anderen Betten, wie in der DE-19 40 478-A dargestellt.

Es hat sich nun gezeigt, dass durch ein ungleichförmiges Anströmen des Katalysators während der Reduzier- bzw. Vorwärmphase ebenso wie bei Normalbetrieb des Ammoniakkonverters die Temperaturverteilung über den Umfang des Katalysatorbettes sehr ungleichförmig ausfallen kann, was insbesondere beim Reduzieren oder bei der Temperaturregelung des ersten Katalysatorbettes mittels Kaltgas dazu führen kann, dass die Reduktion bzw. Reaktion ungleichförmig abläuft. Durch die im Wesentlichen radiale Durchströmung der Katalysatorbetten und Wärmetauscher bleibt diese Ungleichverteilung der Temperatur auch in den nachgeschalteten Katalysatorbetten erhalten, da durch den auf einem Umfangsbereich kälter aus dem Katalysatorbett austretenden Gasstrom das eintretende Kreislaufgas auf der Rohrseite des nachgeschalteten Wärmetauschers weniger vorgewärmt wird und dieses somit ebenfalls weniger vorgewärmte Gas in das Katalysatorbett einströmt. Durch diesen Rückkopplungseffekt zieht sich eine ungleichmäßige Temperaturverteilung im Wesentlichen auf den gleichen Umfangswinkelbereich durch alle Katalysatorbetten des Reaktors.

Hier setzt die Erfindung an, deren Aufgabe darin besteht, eine möglichst gleichmäßige Anströmung der Katalysatorbetten und Wärmetauscher derart zu erreichen, dass eine möglichst gleichförmige Temperatur bei ein- und austretenden Gasströmen über den Umfang des Ammoniakkonverters gegeben ist.

Mit einem Ammoniakkonverter der eingangs bezeichneten Art wird diese Aufgabe gemäß der Erfindung dadurch gelöst, dass wenigstens einer der Ringräume mit statischen Mischern zur spiralförmigen Strömungsleitung durch den oder die Ringräume versehen ist.

Es hat sich gezeigt, dass schon eine geringfügige spiralförmige Strömung in den Ringräumen zu einer deutlichen Vergleichmäßigung der Temperaturverteilung über den Bettumfang führt. Dies gilt auch für die Anströmung eines Wärmetauschers. An dieser Stelle sei bemerkt, dass Einrichtungen zur Strömungsleitung in den Katalysatorbetten bekannt sind, so aus der DE-19 57 696-A oder der AT-287 011-B.

Ausgestaltungen der Erfindung ergeben sich aus den Unteransprüchen. Dabei kann vorgesehen sein, dass die statischen Mischer als Strömungsumlenkbleche ausgebildet sind.

Eine weitere Ausgestaltung der Erfindung besteht darin, dass wenigstens im Einlaufbereich der Strömung zum Wärmetauscher Strömungsleitbleche zur Erzeugung einer spiralförmigen Strömung vorgesehen sind.

Je nach Baugröße und Bauart kann es zweckmäßig sein, die in den Ringräumen vorgesehenen Mischer als geschlossene Spiralen auszubilden oder aber auch als unterbrochene Spiralabschnitte, beide Alternativen sind nach der Erfindung vorgesehen.

Unterschiedliche Bauarten können erfindungsgemäß auch darin liegen, dass die unterschiedlichen Ringräume mit einer gleichsinnigen Wendelung ausgestattet sind oder aber auch mit einer gegenläufigen Wendelung, etwa, dass in Aufsicht der Anströmbereich des ersten Katalysatorbettes von außen nach innen im Uhrzeigersinn erfolgt und die Abströmung aus dem Katalysatorbett im inneren Ringraum gegen den Uhrzeigersinn.

Diese Art Zwangsströmung kann sowohl bei Katalysatorbetten vorgesehen sein, deren Hauptdurchströmrichtung von außen nach innen ausgerüstet ist, oder aber auch bei Katalysatorbetten, die von innen nach außen durchströmt werden.

Weitere Merkmale, Einzelheiten und Vorteile der Erfindung ergeben sich aufgrund der nachfolgenden Beschreibung sowie anhand der Zeichnung. Diese zeigt in
- Fig. 1: einen vereinfachten Querschnitt durch einen Ammoniakkonverter mit zwei Katalysatorbetten,
- Fig. 2: in gleicher Darstellungsweise einen Schnitt durch einen Ammoniakkonverter mit drei Katalysatorbetten sowie in
- Fig. 3: eine Prinzipskizze von statischen Mischern.

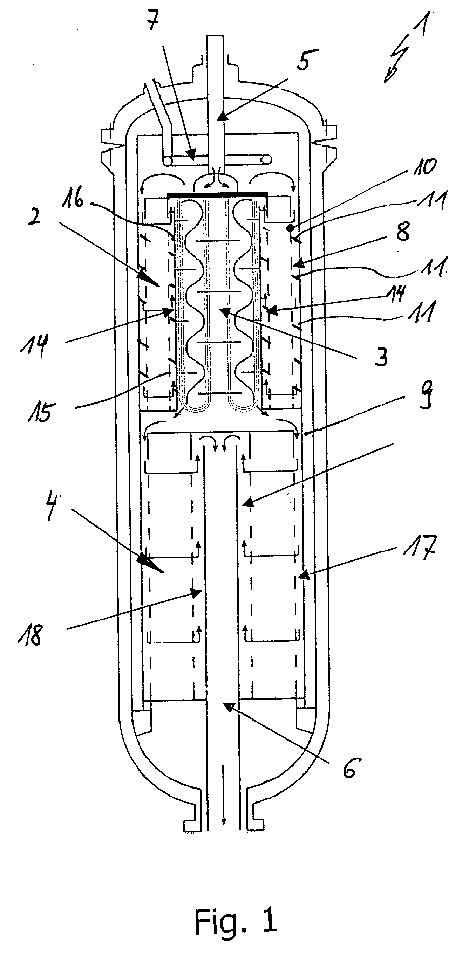

Der in Fig. 1 allgemein mit 1 bezeichnete Ammoniakkonverter weist ein erstes Katalysatorbett 2 auf, das im Inneren koaxial mit einem Wärmetauscher 3 ausgerüstet ist, wobei ein zweites Katalyorsatorbett 4 in Strömungsrichtung gesehen stromabwärts nachgeschaltet ist. Das Kreislaufgas wird über einen Zuführstutzen 5 dem Konverter 1 zugeführt und verlässt den Konverter über das Austrittsrohr 6.

Zum Steuern bzw. zum Anfahren des Konverters, wobei dieser Vorgang bei der Erstinbetriebnahme der Reduzierung des Katalysatormateriales dient, wird über einen Ringverteiler 7 im Kopf des Konverters Gas eingespeist, das zunächst den äußeren Ringraum 8, der zwischen der Gehäusewand 9 des Konvertereinsatzes und dem äußeren Zylindermantel 10 gebildet ist, beaufschlagt.

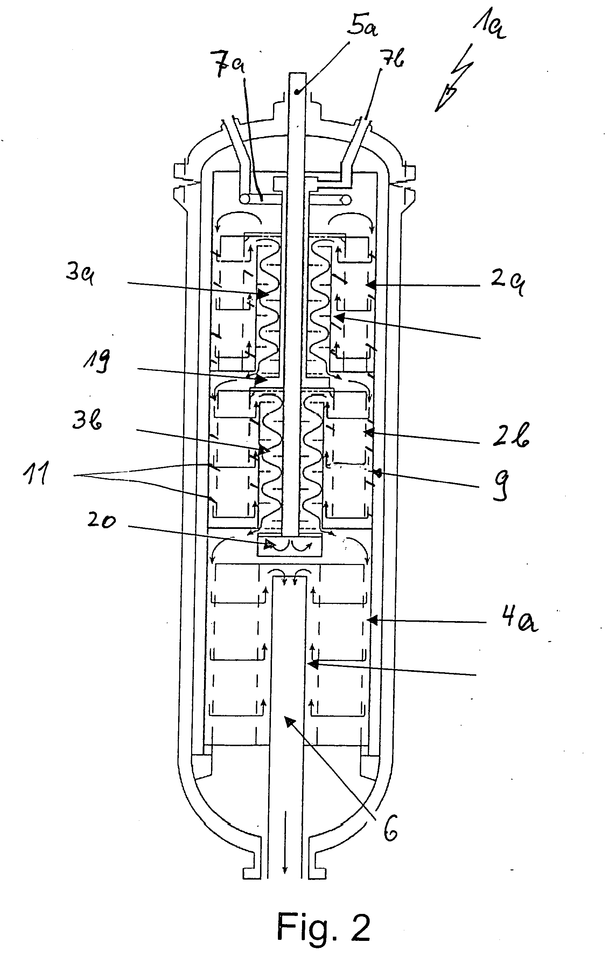

Erfindungsgemäß sind in diesem Ringraum 8 statische Mischer 11 vorgesehen, was in den Fig. 1 und 2 durch kleine schräggestellte Striche angedeutet ist.

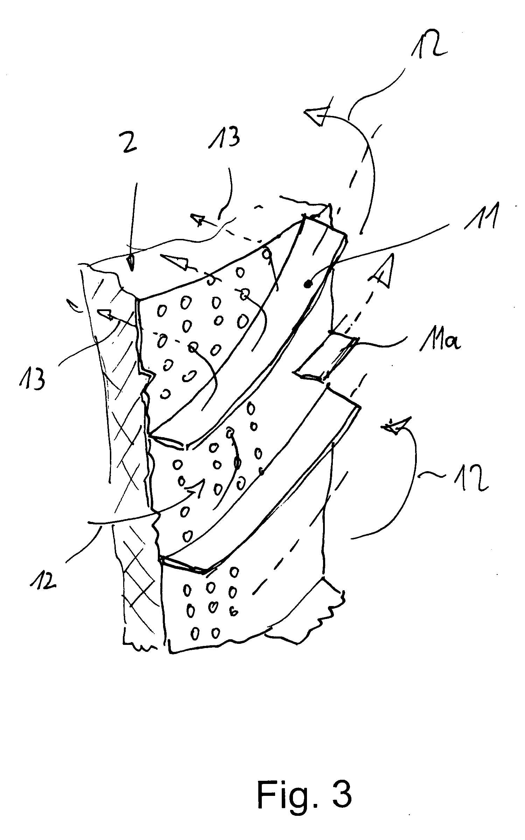

Durch diese statischen Mischer 11 wird eine spiralförmige Strömung erzeugt, die in Fig. 3 vereinfacht wiedergegeben ist. Diese Spiralströmung ist durch Pfeile 12 angedeutet, die in den Katalysator 2 eintretenden Gasströme sind in Fig. 3 durch kleine Pfeile 13 angedeutet.

Nach Durchströmen des Katalysators 2 gelangt das Gas in den mit 14 bezeichneten Ringraum zwischen Innenzylinder 15 des ersten Katalysators 2 und dem zylindrischen Strömungsleitblech 16, welches die Wärmetauscherrohre des Wärmetauschers 3 im Wesentlichen umgibt.

Erfindungsgemäß können auch in diesem Ringraum 14 statische Mischer vorgesehen sein, etwa in der gleichen oder ähnlichen Gestaltung wie die in Fig. 3 angedeuteten Leitspiralen 11 bzw. Leitspiralabschnitte 11a. Die weitere Strömung im Ammoniakkonverter 1 ist in Fig. 1 durch kleine Pfeile wiedergegeben, wobei, falls dies notwendig sein sollte, auch die Ringräume 17 bzw. 18, die vom zweiten Katalysatorbett 4 gebildet werden, ggf. mit statischen Mischern ausgerüstet sein können, was in Fig. 1 nicht näher dargestellt ist.

Fig. 2 zeigt ein insofern abgewandeltes Ausführungsbeispiel als der dortige Ammoniakkonverter 1a mit drei Katalysatorbetten ausgestattet ist, nämlich einmal mit dem in Fig. 2 oberen ersten Katalysatorbett 2a, einem diesem Katalysatorbett folgenden Katalysatorbett 2b und dem dann folgenden unteren Katalysatorbett 4a, wobei die beiden Katalysatorbetten 2a und 2b im Inneren der koaxialen Wärmetauscher, allgemein mit 3a und 3b bezeichnet, ausgerüstet sind.

Zum Steuern, Anfahren bzw. Reduzieren der Katalysatoren kann Gas über die Ringleitung 7a dem oberen Katalysatorbett zugeführt werden und über eine das zentrische Zuführrohr 5a für das Kreislaufgas umgebende Rohr 7b dem darunter liegenden Katalysatorbett 2b. Auch bei dieser Ausgestaltung sind entsprechende statische Mischer 11 in den Ringräumen durch schräge Striche angedeutet. Im übrigen wird auch hier die Strömung durch kleine Pfeile wiedergegeben.

Die Temperaturregelung der Reaktoren bzw. Konverter erfolgt, wie oben schon erwähnt, über das Einleiten von Heiz- bzw. Kühlgas über die Leitungen 7a bzw. 7b, die Räume 19 bzw. 20 unterhalb des ersten Wärmetauschers 3a bzw. unterhalb des zweiten Wärmetauschers 3b dienen der Um- bzw. Einleitung des jeweiligen Gases, die Endkammer 20 dient zur Einleitung des eintretenden Gases durch die Leitung 5a in den Wärmetauscher 3b.

Fig. 3 dient nur der Veranschaulichung. Die Erfindung ist nicht etwa auf die dort durch die Pfeile angegebenen Strömungsrichtungen beschränkt. Die mantelseitige Gasführung kann in Fig. 3 von links unten nach rechts oben verlaufen wie auch umgekehrt, d.h. gegen die dortigen Pfeile. Der Katalysator kann von außen nach innen durchströmt werden oder von innen nach außen, d.h. z.B. anders als die Pfeile 13 dies andeuten.

## Patentansprüche

1. Ammoniakkonverter (1) mit wenigstens einem im Wesentlichen radial durchströmten Katalysatorbett (2), welches einen Wärmetauscher (3) konzentrisch umgibt, wobei zwischen Konvertereinsatzaußenwand (9) und dem äußeren Zylindermantel (10) des Katalysatorbetts (2) und/oder zwischen der inneren Zylinderwand (15) des Katalysatorbetts (2) und einem die Wärmetauscherrohre umgebenden Strömungsleitzylinder (16) ein äußerer bzw. ein innerer Ringraum (8,14) vorgesehen ist,
**dadurch gekennzeichnet,**
**dass** wenigstens einer der Ringräume (8,14) mit statischen Mischern (11) zur spiralförmigen Strömungsleitung durch den oder die Ringräume versehen ist.

2. Ammoniakkonverter nach Anspruch 1,
**dadurch gekennzeichnet,**
**dass** die statischen Mischer als Strömungsumlenkbleche (11) ausgebildet sind.

3. Ammoniakkonverter nach Anspruch 1 oder 2,
**dadurch gekennzeichnet,**
**dass** wenigstens im Einlaufbereich der Strömung zum Wärmetauscher (3) Strömungsleitbleche (11) zur Erzeugung einer spiralförmigen Strömung vorgesehen sind.

4. Ammoniakkonverter nach einem der vorangehenden Ansprüche,
**dadurch gekennzeichnet,**
**dass** die in den Ringräumen vorgesehenen Mischer (11) als geschlossene Spiralen ausgebildet sind.

5. Ammoniakkonverter nach einem der Ansprüche 1 bis 3,
**dadurch gekennzeichnet,**
**dass** die in den Ringräumen vorgesehenen Mischer (11a) als unterbrochene Spiralabschnitte ausgebildet sind.

6. Ammoniakkonverter nach einem der vorangehenden Ansprüche,
**dadurch gekennzeichnet,**
**dass** die Wendelung in den unterschiedlichen Ringräumen (8, 14) gleichsinnig oder gegenläufig ausgebildet ist.

7. Ammoniakkonverter nach einem der vorangehenden Ansprüche,
**dadurch gekennzeichnet,**
**dass** die Hauptdurchströmungsrichtung durch das Katalysatorbett (2,4) radial von außen nach innen oder radial von innen nach außen ausgebildet ist.

## Claims

1. Ammonia converter (1) having at least one catalyst bed (2), which is flowed through substantially radially and concentrically surrounds a heat exchanger (3), an external and/or an internal annular space (8, 14) being provided between the outer wall (9) of the converter insert and the outer cylinder shell (10) of the catalyst bed (2) and/or between the inner cylinder wall (15) of the catalyst bed (2) and a flow guiding cylinder (16) surrounding the heat exchanger pipe, **characterised in that** at least one of the annular spaces (8, 14) is provided with static mixers (11) in order to guide the flow helically through the annular space(s).

2. Ammonia converter according to claim 1, **characterised in that** the static mixers are formed as flow baffles (11).

3. Ammonia converter according to either claim 1 or claim 2, **characterised in that** flow baffles (11) for generating a helical flow are provided at least in the flow inlet region of the heat exchanger (3).

4. Ammonia converter according to any of the preceding claims, **characterised in that** the mixers (11) provided in the annular spaces are formed as continuous helices.

5. Ammonia converter according to any of claims 1 to 3, **characterised in that** the mixers (11a) provided in the annular spaces are formed as discontinuous helical portions.

6. Ammonia converter according to any of the preceding claims, **characterised in that** the helical formation in the different annular spaces (8, 14) is in the same direction or in the opposite direction.

7. Ammonia converter according to any of the preceding claims, **characterised in that** the main direction of flow through the catalyst bed (2, 4) is radially from the outside to the inside or radially from the inside to the outside.

## Revendications

1. Convertisseur d'ammoniac (1) avec au moins un lit catalytique (2) parcouru sensiblement radialement, qui entoure concentriquement un échangeur de chaleur (3), dans lequel il est prévu entre la paroi externe rapportée (9) du convertisseur et la chemise cylindrique externe (10) du lit catalytique (2) et/ou entre la paroi cylindrique interne (15) du lit catalytique (2) et un cylindre conducteur de courant (16) entourant les tubes d'échangeur de chaleur un espace annulaire externe ou interne (8, 14),
caractérisé en ce qui :
au moins l'un des espaces annulaires (8, 14) est pourvu de mélangeurs statiques (11) pour acheminer le courant en mode spiralé à travers le ou les espaces annulaires.

2. Convertisseur d'ammoniac selon la revendication 1, **caractérisé en ce que** :
les mélangeurs statiques se présentent sous la forme de chicanes déflectrices de courant (11).

3. Convertisseur d'ammoniac selon la revendication 1 ou la revendication 2,
**caractérisé en ce que** :
au moins dans la zone d'admission du courant dans l'échangeur de chaleur (3), il est prévu des chicanes déflectrices de courant (11) pour produire un courant spiralé.

4. Convertisseur d'ammoniac selon l'une quelconque des revendications précédentes,
**caractérisé en ce que** :
les mélangeurs (11) prévus dans les espaces annulaires se présentent sous la forme de spirales fermées.

5. Convertisseur d'ammoniac selon l'une quelconque des revendications 1 à 3,
**caractérisé en ce que** :
les mélangeurs (11a) prévus dans les espaces annulaires se présentent sous la forme de sections de spirale interrompues.

6. Convertisseur d'ammoniac selon l'une quelconque des revendications précédentes,
**caractérisé en ce que** :
la conformation hélicoïdale dans les différents espaces annulaires (8, 14) se fait dans le même sens ou dans le sens contraire.

7. Convertisseur d'ammoniac selon l'une quelconque des revendications précédentes,
**caractérisé en ce que** :
le sens de passage principal à travers le lit catalytique (2, 4) se fait radialement de l'extérieur vers l'intérieur ou radialement de l'intérieur vers l'extérieur.
